(19) Europäisches Patentamt
European Patent Office
Office européen des brevets

(11) **EP 3 321 859 B1**

(12) **EUROPEAN PATENT SPECIFICATION**

(45) Date of publication and mention
of the grant of the patent:
**27.01.2021 Bulletin 2021/04**

(51) Int Cl.:
***G06K 9/62*** *(2006.01)*     ***G08B 13/186*** *(2006.01)*
***G08B 29/18*** *(2006.01)*     ***G06F 16/00*** *(2019.01)*

(21) Application number: **16840792.2**

(22) Date of filing: **26.08.2016**

(86) International application number:
**PCT/CN2016/096951**

(87) International publication number:
**WO 2017/036363 (09.03.2017 Gazette 2017/10)**

(54) **OPTICAL FIBER PERIMETER INTRUSION SIGNAL IDENTIFICATION METHOD AND DEVICE, AND PERIMETER INTRUSION ALARM SYSTEM**

VERFAHREN UND VORRICHTUNG ZUR IDENTIFIZIERUNG EINES FASEROPTISCHEN PERIMETEREINBRUCHSSIGNALS UND PERIMETEREINBRUCHALARMSYSTEM

PROCÉDÉ ET DISPOSITIF D'IDENTIFICATION DE SIGNAL D'INTRUSION DANS UN PÉRIMÈTRE À FIBRE OPTIQUE, ET SYSTÈME D'ALARME D'INTRUSION DANS UN PÉRIMÈTRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.09.2015 CN 201510556766**

(43) Date of publication of application:
**16.05.2018 Bulletin 2018/20**

(73) Proprietor: **Nuctech Company Limited**
**TongFang Building,**
**Shuangqinglu,**
**Haidian District**
**Beijing 100084 (CN)**

(72) Inventors:
 • **CONG, Yushu**
 **Beijing 100084 (CN)**
 • **JIANG, Ting**
 **Beijing 100084 (CN)**
 • **XU, Jun**
 **Beijing 100084 (CN)**
 • **YANG, Jie**
 **Beijing 100084 (CN)**
 • **GAO, Baisong**
 **Beijing 100084 (CN)**
 • **XU, Huikang**
 **Beijing 100084 (CN)**
 • **TONG, Yian**
 **Beijing 100084 (CN)**
 • **DONG, Kun**
 **Beijing 100084 (CN)**
 • **MAO, Xianhui**
 **Beijing 100084 (CN)**

(74) Representative: **Cabinet Beau de Loménie**
**158, rue de l'Université**
**75340 Paris Cedex 07 (FR)**

(56) References cited:
| | |
|---|---|
| CN-A- 103 236 127 | CN-A- 103 345 808 |
| CN-A- 104 240 455 | CN-A- 104 240 455 |
| CN-A- 104 751 580 | CN-A- 105 184 319 |
| US-A1- 2006 156 404 | US-A1- 2014 307 956 |

EP 3 321 859 B1

**Description**

**TECHNICAL FIELD**

The present invention generally relates to photoelectric signal processing and identification technology, and more particularly to an identification method for an optical fiber perimeter intrusion signal, an identification device for an optical fiber perimeter intrusion signal and an optical fiber perimeter intrusion alarm system.

**BACKGROUND**

With the development of society, in order to prevent illegal invasion and destruction, more and more important facilities need to carry out perimeter monitoring and security. Fiber grating technology has seen wide application in intelligent perimeter security systems because of its simple structure, dielectric insulation, high pressure resistance, corrosion resistance, electromagnetic interference immunity and high sensitivity.

For a perimeter security system utilizing the fiber grating technology, its main problem is to identify an intrusion signal and shield an interference signal from external environment such as wind, rain, snow or vehicle traffic. At present, identification of intrusion events mainly adopts neural network, SVM and other classical machine learning methods.

How to provide an intrusion signal identification method which is simple and easy to implement, has high classification ability, and good classification effect has become a research direction of the art.

Document CN 104 240 455 A discloses a method for identifying a disturbance event in a distributed type optical fiber pipeline security early-warning system. Document US 2014/307956 A1 discloses image labeling to recognize body organs in a medical image, to label body parts in a depth image of a game player, to label objects in a video of a scene.

**SUMMARY**

In view of the above, the present disclosure provides an identification method for an optical fiber perimeter intrusion signal, an identification device for an optical fiber perimeter intrusion signal and an optical fiber perimeter intrusion alarm system, to implement identification and alarm of an intrusion event for an optical fiber perimeter intrusion system. The invention is defined by independent claims 1 and 5 and their corresponding dependent claims.

Additional aspects and advantages of the present invention will be set forth in part in the description which follows and, in part, will become apparent from the description, or may be learned by practice of the present invention.

One aspect of the present invention provides an identification method for an optical fiber perimeter intrusion signal, including: acquiring a real-time signal from a monitored signal of an optical fiber perimeter monitoring system; preprocessing the real-time signal to remove noise of the real-time signal; determining whether the de-noised real-time signal is an intrusion signal; when the de-noised real-time signal is an intrusion signal, segmenting the intrusion signal to obtain discrete signal segments from the intrusion signal, and respectively extracting a relevant feature from the signal segments; and classifying the intrusion signal according to a classification rule determined by a previously created decision tree model and the extracted relevant feature of the signal segments; wherein the decision tree model contains at least one decision tree.

In an embodiment, the classification rule determined by each decision tree includes: a classification rule on each path from a root of the decision tree to a leaf node of the decision tree, and each classification rule includes: a combination term of a former part of the classification rule formed by all of the attribute conditions along each path, and a latter part of the classification rule formed by a leaf node on the path.

In the embodiments of the invention, the decision tree model contains multiple decision trees, and classifying the intrusion signal according to a classification rule determined by a previously created decision tree model and the extracted relevant feature of the signal segments includes: classifying the intrusion signal successively according to a classification rule determined by each decision tree of the multiple decision trees and the extracted relevant feature of the signal segments to obtain multiple corresponding classification results; taking same classification results of the multiple classification results into a group, to obtain at least one group of classification results, calculating a number of the classification results in each group of classification results respectively, and taking the classification results of the group having the largest number of classification results as the final classification result of the intrusion signal.

In the embodiments of the invention, the method also includes: creating the decision tree model, wherein creating the decision tree model includes: previously acquiring multiple groups of intrusion signals having known classifications respectively from monitored signals of an optical fiber perimeter monitoring system and the corresponding classification results; respectively preprocessing the multiple groups of intrusion signals having known classifications to remove noise in the multiple groups of intrusion signals having known classifications; respectively segmenting the multiple groups of de-noised intrusion signals having known classifications, to obtain multiple groups of discrete signal segments of intrusion signals from the multiple groups of intrusion signals having known classifications, and respectively extracting relevant features for the multiple groups of discrete signal segments of intrusion signals; and creating a decision tree model according to a first training data set formed by the multiple groups of relevant features for the multiple groups of discrete signal segments of intrusion signals, wherein one group of relevant features form one inputted vector of the first training data set.

In the embodiments of the invention, the decision tree model contains multiple decision trees, and creating a decision tree model includes: randomly sampling the first training data set with replacement, to obtain multiple second training data sets, each of the second training data sets has the same number of inputted vectors as number of inputted vectors contained in the first training data set; and respectively creating multiple corresponding decision trees with a decision tree algorithm according to the multiple second training data sets.

In yet another embodiment, during the process of creating each decision tree, for each inputted vector of the second training data set, for each splitting, part or all of the relevant features are randomly sampled from all of the relevant features of the inputted vector once again.

In yet another embodiment, creating a decision tree model includes: creating a decision tree with a decision tree algorithm according to the first training data set, and post-trimming the decision tree to obtain the decision tree model.

In yet another embodiment, creating a decision tree model further includes: training the decision tree model for multiple times according to the first training data set, to obtain a best decision tree model.

In yet another embodiment, the decision tree algorithm includes: a CART algorithm utilizing a Gini indicator as a measure of a splitting attribute.

In yet another embodiment, the relevant feature includes a part or all of: a peak mean difference, a variance, a skew, a kurtosis, a number of extreme points, and a frequency domain feature obtained by wavelet packet decomposition.

Another aspect of the present invention provides an identification device for an optical fiber perimeter intrusion signal, including: a signal acquiring module configured to acquire a real-time signal from a monitored signal of an optical fiber perimeter monitoring system; a signal pre-processing module configured to preprocess the real-time signal to remove noise of the real-time signal and determine whether the de-noised real-time signal is an intrusion signal; a feature extraction module configured to, when the de-noised real-time signal is an intrusion signal, segment the intrusion signal to obtain discrete signal segments from the intrusion signal, and respectively extract a relevant feature from the signal segments; and a decision-tree classification module configured to classify the intrusion signal according to a classification rule determined by a previously created decision tree model and the extracted relevant feature of the signal segments; wherein the decision tree model contains at least one decision tree.

In an embodiment, the classification rule determined by each decision tree includes: a classification rule on each path from a root of the decision tree to a leaf node of the decision tree, and each classification rule includes: a combination term of a former part of the classification rule formed by all of the attribute conditions along each path, and a latter part of the classification rule formed by a leaf node on the path.

In the decision tree model contains multiple decision trees, and classifying the intrusion signal according to a classification rule determined by a previously created decision tree model and the extracted relevant feature of the signal segments includes: classifying the intrusion signal successively according to a classification rule determined by each decision tree of the multiple decision trees and the extracted relevant feature of the signal segments to obtain multiple corresponding classification results; taking same classification results of the multiple classification results into a group, to obtain at least one group of classification results, calculating a number of the classification results in each group of classification results respectively, and taking the classification results of the group having the largest number of classification results as the final classification result of the intrusion signal.

In the embodiments of the invention, the signal acquiring module is further configured to previously acquire multiple groups of intrusion signals having known classifications respectively from monitored signals of an optical fiber perimeter monitoring system and the corresponding classification results; the signal pre-processing module is further configured to respectively preprocess the multiple groups of intrusion signals having known classifications to remove noise in the multiple groups of intrusion signals having known classifications; the feature extraction module is further configured to respectively segment the multiple groups of de-noised intrusion signals having known classifications, to obtain multiple groups of discrete signal segments of intrusion signals from the multiple groups of intrusion signals having known classifications, and respectively extract relevant features for the multiple groups of discrete signal segments of intrusion signals; and the decision-tree classification module is further configured to create a decision tree model according to a first training data set formed by multiple groups of relevant features for the multiple groups of discrete signal segments of intrusion signals, wherein one group of relevant features form one inputted vector of the first training data set.

In the embodiments of the invention, the decision tree model contains multiple decision trees, and creating a decision tree model includes: randomly sampling the first training data set with replacement, to obtain multiple second training data sets, each of the second training data sets has the same number of inputted vectors as number of inputted vectors contained in the first training data set; and respectively creating multiple corresponding decision trees with a decision tree algorithm according to the multiple second training data sets.

In yet another embodiment, during the process of creating each decision tree, for each inputted vector of the second training data set, for each splitting, part or all of the relevant features are randomly sampled from all of the relevant features of the inputted vector once again.

In yet another embodiment, creating a decision tree model includes: creating a decision tree with a decision tree algorithm according to the first training data set, and post-trimming the decision tree to obtain the decision tree model.

In yet another embodiment, creating a decision tree model further includes: training the decision tree model for multiple times according to the first training data set, to obtain a best decision tree model.

In yet another embodiment, the decision tree algorithm includes: a CART algorithm utilizing a Gini indicator as a measure of a splitting attribute.

In yet another embodiment, the relevant feature includes a part or all of: a peak mean difference, a variance, a skew, a kurtosis, a number of extreme points, and a frequency domain feature obtained by wavelet packet decomposition.

Yet another aspect of the present invention provides an optical fiber perimeter intrusion alarm system, including: an optical path subsystem configured to provide a monitored signal of an optical fiber perimeter; the identification device for an optical fiber perimeter intrusion signal according to any one of above, configured to identify an intrusion signal of the monitored signal and classify the intrusion signal of the monitored signal; and an alarm subsystem configured to issue a corresponding alarm according to the classification of the intrusion signal outputted by the identification device.

In the identification device for an optical fiber perimeter intrusion signal and the employed identification method provided in the present invention, by extracting relevant features of the intrusion signals of known classifications, a training data set of a model may be obtained to create a corresponding decision tree model. Based on the created decision tree model, a classification rule for the optical fiber perimeter intrusion signal may be determined, to identify and classify an optical fiber perimeter intrusion signal. The operation is simple, easy to implement, and has high classification capability and better classification effect.

## BRIEF DESCRIPTION OF THE DRAWINGS

The above and other features and advantages of the present invention will become more apparent from detailed description of example embodiments thereof with reference to accompanying drawings.

Fig. 1 is a flow chart illustrating an identification method for an optical fiber perimeter intrusion signal according to an example embodiment.

Fig. 2 is a schematic diagram illustrating a decision tree for identifying an optical fiber perimeter intrusion signal according to an example embodiment.

Fig. 3 is a flow chart illustrating a method for creating a decision tree model for identifying an optical fiber perimeter intrusion signal according to an example embodiment.

Fig. 4 is a block diagram illustrating an identification device for an optical fiber perimeter intrusion signal according to an example embodiment.

Fig. 5 is a block diagram illustrating an optical fiber perimeter intrusion alarm system according to an example embodiment.

Fig. 6 is a schematic diagram illustrating an optical path subsystem utilizing a Michelson interferometer.

Fig. 7 is a schematic diagram illustrating a decision tree combination model formed by an original training data set according to an example embodiment.

## DETAILED DESCRIPTION

The example embodiments will now be described more fully with reference to the accompanying drawings. However, the example embodiments may be embodied in many forms and should not be construed as limiting the embodiments set forth herein. Rather, these embodiments are provided to enable the present invention to be thorough and complete, and to fully convey the concepts of the example embodiments to those skilled in the art. The same reference numerals in the drawings denote the same or similar structures, and thus repeated description thereof will be omitted.

The features, structures, or characteristics described may be combined in one or more embodiments in any suitable manner. In the following description, numerous specific details are set forth to give a full understanding of the embodiments of the present invention. However, those skilled in the art will appreciate that the technical aspects of the present invention may also be practiced without one or more of the specific details, or by other methods, components, and the like. In other instances, well-known structures or operations are not shown or described in detail to avoid obscuring the present invention.

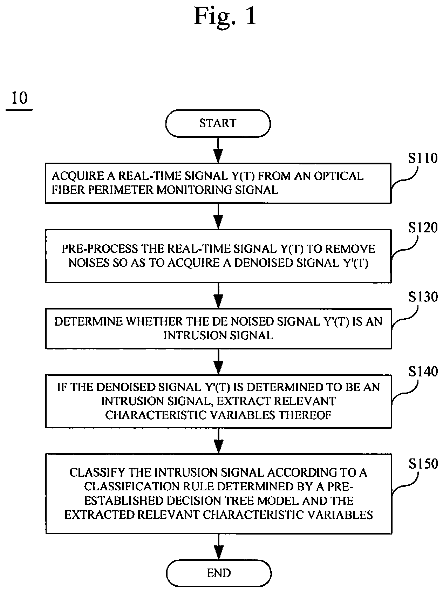

Fig. 1 is a flow chart illustrating an identification method for an optical fiber perimeter intrusion signal according to an example embodiment. As shown in Fig. 1, the method 10 includes the following steps.

At step S110, a real-time signal $y(t)$ is acquired from a monitored signal of an optical fiber perimeter monitoring system.

For example, a signal from an optical fiber perimeter intrusion alarm system is monitored, and a real-time signal $y(t)$ is acquired from the monitored signal. Generally, the real-time signal $y(t)$ is acquired at a sampling frequency.

At step S120, the real-time signal $y(t)$ is preprocessed to remove noise thereof, to acquire a de-noised signal $y'(t)$.

For example, the real-time signal $y(t)$ may be preprocessed by wavelet transform to remove noise such as background white noise.

At step S130, it is determined whether the de-noised signal $y'(t)$ is an intrusion signal.

Generally, an intrusion signal in an optical fiber perimeter system may be roughly divided into climbing, percussion and environment (such as wind, rain, snow and traffic, etc.). In some embodiments, for example, it may be determined whether it is an intrusion signal by comparing the de-noised signal $y'(t)$ with a threshold value. When the de-noised signal $y'(t)$ is higher than the threshold value, it may be determined that the de-noised signal $y'(t)$ is an intrusion signal.

At step S140, when it is determined that the de-noised signal $y'(t)$ is an intrusion signal, a relevant feature is extracted from the de-noised signal $y'(t)$.

Firstly, the de-noised signal $y'(t)$ is segmented to obtain discrete signal segments $\{x(t_i)\}, i=1,...,N$.

After that, a relevant feature is extracted from the discrete signal segments $\{x(t_i)\}, i=1,...,N$. The relevant feature includes part or all of: for example, a peak mean difference (*Diff*), a variance (D), a skew *(Skew)*, a kurtosis (*K*), a number of extreme points (*Num*), and a frequency domain feature. Among them, the peak mean difference (*Diff*), the variance (*D*), the skew (*Skew*), the kurtosis (*K*) and the number of extreme points (*Num*) belong to time domain features. Hereinafter, the above-mentioned features of the signal segments $\{x(t_i)\}, i=1,...,N$ will be respectively defined as follows:

A peak mean difference (*Diff*) is defined as a difference (*Diff*) value between the maximum value $\max(x(t))$ and the mean value $\overline{x(t)}$ of the signal segments $\{x(t_i)\}, i=1,...,N$. The calculation formula is as follows:

$$Diff = \max(x(t)) - \overline{x(t)}$$

A variance (D) is calculated as follows:

$$D = \sum_{i=1}^{N} (x(t_i) - \overline{x(t)})^2 / N$$

A skew (*Skew*) is calculated as follows:

$$Skew = \frac{1}{N}(\sum_{i=1}^{N} (x(t_i) - \overline{x(t)})^3) / (\frac{1}{N}\sum_{i=1}^{N} (x(t_i) - \overline{x(t)})^2)^{3/2}$$

A kurtosis (*K*) is calculated as follows:

$$K = \frac{1}{N}(\sum_{i=1}^{N} (x(t_i) - \overline{x(t)})^4) / (\frac{1}{N}\sum_{i=1}^{N} (x(t_i) - \overline{x(t)})^2)^2$$

A number of extreme points *(Num)* is a counting number of extreme points in the signal segments $\{x(t_i)\}, i=1,...,N$.

A frequency domain feature includes feature $\left[T_1', T_2',......,T_r'\right]$ obtained by wavelet packet decomposition. The calculation process is as follows.

The signal segment $\{x(t_i)\}, i=1,...,N$ is decomposed by j-layer wavelet packet, and the sampling frequency is 2*f*. Then, 2*j* frequency bands of equal widths may be formed, with the width of each frequency band being $\frac{f}{2j}$. After decomposition, j-layer wavelet packet coefficients $C_{j,k}^{m}$ may be obtained, where $k = 1, 2, ..., 2^j - 1$, $m$ is a position index. A number r of frequency bands which are most sensitive to energy are selected, and the energy is calculated and normalized. The calculation formula is as follows:

$$T_{j,k} = \sum_{m} \left| C_{j,k}^{m} \right|^2, \quad T_{j,k}' = \frac{T_{j,k}}{\sum T_{j,k}}.$$

In step S150, the intrusion signal is classified according to a classification rule determined by a previously created decision tree model and the extracted relevant feature.

The above-mentioned previously created decision tree model may include either a model of a single decision tree or a model of a combination of multiple decision trees. Below classifying the intrusion signal according to a classification rule determined by a previously created decision tree model of a single decision tree and the extracted relevant feature will be discussed firstly.

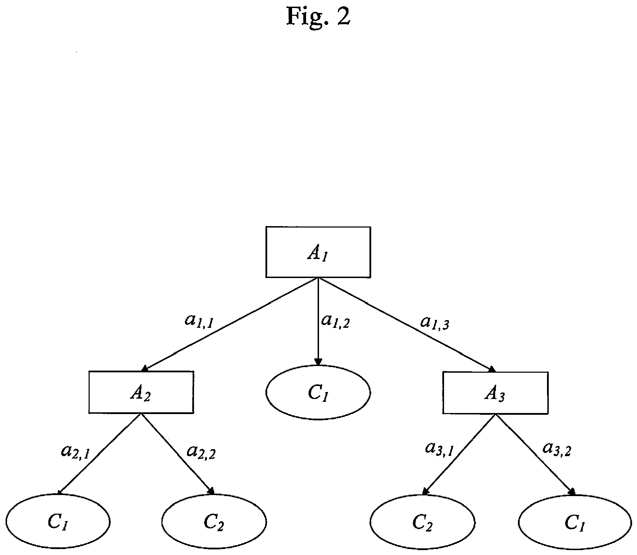

After the previously created decision tree model is established, a corresponding classification rule has been established. Specifically, the classification rule is extracted from the decision tree determined by the decision tree model. Fig. 2 is a schematic diagram illustrating a single decision tree for identifying an optical fiber perimeter intrusion signal according to an example embodiment. Below, with reference to the single decision tree as shown in Fig. 2, how to obtain the classification rule determined by the decision tree and how to perform classification will be explained.

As shown in Fig. 2, $A_1$, $A_2$ and $A_3$ represent three attributes of a decision tree, each of which is, for example, one of the above relevant features. $A_1$ corresponds to three different attribute conditions $a_{1,1}$, $a_{1,2}$ and $a_{1,3}$. $A_2$ corresponds to two different attribute conditions $a_{2,1}$ and $a_{2,2}$. $A_3$ corresponds to two different attribute conditions $a_{3,1}$ and $a_{3,2}$. $C_1$ and $C_2$ represent two classifications of intrusion signals, as described above, including, for example, climbing, striking and environment (such as wind, rain, snow and traffic, etc.) and so on. A classification rule is created for each path from the root ($A_1$ in the figure) to a leaf, expressed respectively by IF-THEN. All of the attribute conditions along the path form a combination term of the former part (i.e. the IF part) of the rule, and the leaf node containing the classification ($C_n$) forms the latter part (i.e. the THEN part) of the rule. For example, if (IF) the classified signal has the attribute $A_1$ satisfying the condition $a_{1,2}$, the (THEN) classification is $C1$; if the classified signal has the attribute $A_1$ satisfying the condition $a_{1,1}$ and the attribute $A_2$ satisfying the condition $a_{2,2}$, the classification is $C_2$, and so on, which will not be repeated herein. It should be noted that described above is only an example as how to obtain a classification rule determined by a decision tree model, and is not intended to limit the present invention.

After the classification rule is obtained, the extracted relevant feature is applied to the classification rule to classify the intrusion signal. For example, in the case where the feature vectors $A_1$ and $A_2$ extracted from the intrusion signal respectively satisfy the attribute conditions of $a_{1,1}$ and $a_{2,1}$, the intrusion signal is classified as $C_1$.

As mentioned above, the previously created decision tree model may also be a decision tree combination model $T$, which includes multiple decision trees $T_1, T_2, ..., T_k$. The following highlights how to determine the classification result based on the decision tree combination model $T$. By utilizing a simple voting method, the inputted intrusion signal is classified. For each inputted intrusion signal, each of the decision trees $T_1, T_2, ..., T_k$ in the decision tree combination model $T$ as a single decision tree may generate a classification result as described above. That is, each tree has a vote for one of the classifications $C_i$, $i = 1, 2, ..., n$. A number of votes for each classification $C_i$, $i = 1, 2, ..., n$ is calculated, and the classification with the largest number of votes $C_j$, $1 \le j \le n$ is finally selected as the final classification result of the intrusion signal. Alternatively, the classification results of each of the decision trees $T_1, T_2, ..., T_k$ are grouped, to obtain at least one group of classification results. A number of classification results in each group is calculated. The group having the largest number of classification results is selected, and the classification in the selected group is taken as the final classification.

Below how to create the above decision tree model before the above identification method is performed will be discussed in detail. The decision tree model includes decision tree model only having a single decision tree, and a model of a combination of multiple corresponding decision trees that participate in voting.

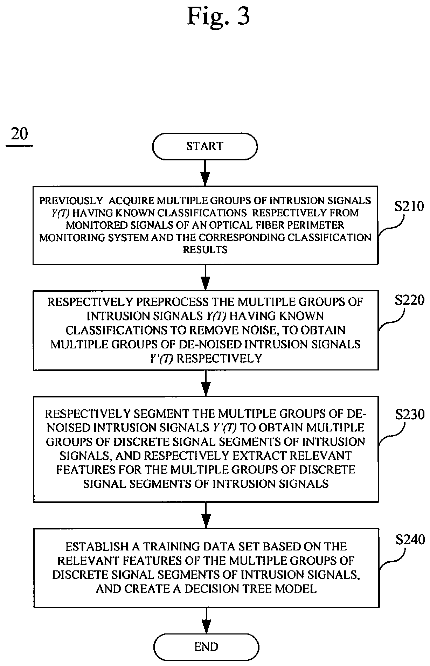

Fig. 3 is a flow chart illustrating a method for creating a decision tree model for identifying an optical fiber perimeter intrusion signal according to an example embodiment. As shown in Fig. 3, the method 20 includes the following steps.

In step S210, previously, multiple groups of intrusion signals *Y(t)* having known classifications and the corresponding classification results are respectively acquired from monitored signals of an optical fiber perimeter monitoring system.

In order to establish a decision tree model for classification of intrusion signals, multiple groups of intrusion signals *Y(t)* having known classifications are respectively acquired from monitored signals of an optical fiber perimeter monitoring system in advance. The known classifications include, for example, the above mentioned climbing, striking and environment (such as wind, rain, snow and traffic, etc.), which is not limited thereto in the present invention.

In step S220, the multiple groups of intrusion signals *Y(t)* having known classifications are respectively preprocessed to remove noise thereof, to obtain multiple groups of de-noised intrusion signals *Y'(t)* respectively.

For example, the multiple groups of intrusion signals *Y(t)* having known classifications may be processed by wavelet transform to remove noise such as background white noise.

In step S230, the multiple groups of de-noised intrusion signals *Y'(t)* are respectively segmented to obtain multiple groups of discrete signal segments of intrusion signals $\{X(t_i)\}$, $i = 1,...,N$, and relevant features are respectively extracted for the multiple groups of discrete signal segments of intrusion signals $\{X(t_i)\}$, $i = 1, ...,N$.

Specifically, the relevant feature includes part or all of: for example, a peak mean difference (*Diff*), a variance (D), a skew *(Skew)*, a kurtosis (K), a number of extreme points *(Num)*, and a frequency domain feature. Among them, the peak mean difference (*Diff*), the variance *(D)*, the skew *(Skew)*, the kurtosis (*K*) and the number of extreme points *(Num)* belong to time domain features. The above-mentioned relevant feature vectors are defined and calculated as described above, which will not be repeated herein.

In step S240, a training data set is established based on the relevant features of the multiple groups of discrete signal segments of intrusion signals $\{X(t_i)\}$, $i = 1,...,N$, and a decision tree model is created.

Specifically, it is assumed that each group of signal segments of intrusion signals $\{X(t_i)\}$, $i = 1,...,N$ has relevant features $\{A_1, A_2,.......,A_M\}$. Such a feature vector forms an inputted vector, and multiple groups of inputted vectors form a training data set D of a decision tree model.

Based on the entire training data set D, a decision tree model is created. The creation of a decision tree model having a single decision tree will be described firstly. Below a CART algorithm utilizing a Gini indicator as a measure of a splitting attribute will be illustrated as an example.

Firstly, the Gini indicator is defined by the following formula:

$$Gini(D) = 1 - \sum_{i=1}^{n} p_i^2$$

Where $p_i$ is a probability of a classification $C_i$ appearing in a training data set *D*.

For a certain attribute *A* in the training data set *D*, if the training data set *D* is divided into two parts $D_1$ and $D_2$, the given D may have a Gini indicator as follows:

$$Gini_A(D) = \frac{|D_1|}{|D|} Gini(D_1) + \frac{|D_2|}{|D|} Gini(D_2)$$

A Gini indicator is calculated for each of the different subsets of the attribute, and the subset having the smallest Gini indicator is selected as a splitting subset of the attribute. This process is repeated until the splitting stops. At this time, the creation of a decision tree model containing a single decision tree is completed.

After the decision tree is created, in order to avoid over-fitting caused by noise of the training data set samples or insufficient samples of the training data set or the like, the created decision tree is trimmed. Trimming mainly includes pre-trimming and post-trimming.

Pre-trimming is done by stopping the tree in advance, such as by determining that the splitting or dividing the subsets of the training data set stops at a given node, to trim the tree. Once the splitting stops, the given node becomes a leaf node. Post-trimming is cutting a sub-tree from a completely grown tree. By deleting a branch of a node and replacing the branch with a leaf node, a sub-tree of given node is trimmed. The leaf node is marked with a classification used most frequently in the sub-tree being replaced. The principle of post-trimming includes a minimum description length principle and a minimum expected error rate principle. According to statistical measures, unreliable branches may be removed, to improve the accurate classification capability of the tree independent of the test data.

The CART algorithm usually utilizes the post-trimming strategy. For example, a CCP (cost-complexity) method is utilized for trimming. Firstly, the original decision tree is trimmed from bottom to top to obtain a series of trees

$\{T_0,T_1,......,T_k\}$. $T_0$ is an original tree untrimmed. $T_k$ is a tree having only one node. $T_{i+1}$ is obtained by replacing one or more subtrees of $T_i$. Afterwards, a best tree is selected as the final decision tree after being trimmed according to the actual error rate.

The above is a decision tree obtained as after one time of training. It is also possible to perform multiple times of training depending on the training data set, to select the best decision tree, and to determine the decision tree model.

In addition, the decision tree algorithm that may be utilized may also include: the ID3 algorithm which utilizes an information gain as the measurement of the splitting attribute or the C4.5 algorithm which utilizes an information gain as the measurement of the splitting attribute.

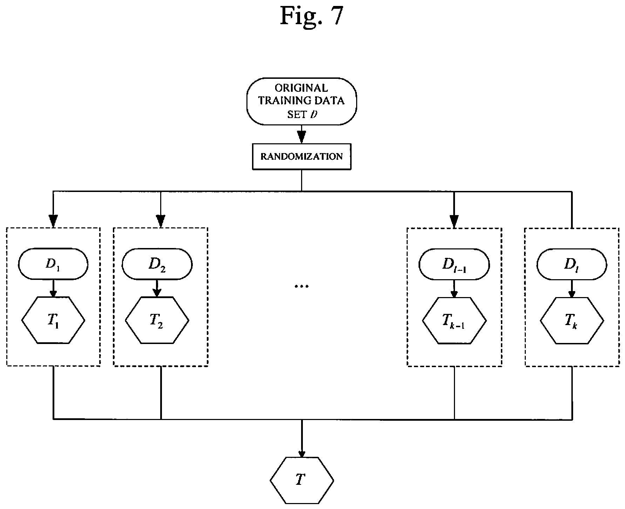

The following describes the creation of a decision tree model with multiple decision trees. Fig. 7 is a schematic diagram illustrating a decision tree combination model formed by an original training data set according to an example embodiment.

After determining the entire training data set $D$ as described above, as shown in Fig. 7, the training data set $D$ is randomly sampled with replacement, to obtain a number $l$ of training data sets $D_1,D_2,...,D_l$. Each training data set contains the same number of inputted vectors as that of the original training data set $D$. A corresponding decision tree model is respectively established for each of the $l$ training data sets $D_1,D_2,...,D_l$. Each decision tree model may be created with the CART algorithm for example, and the present invention is not limited thereto.

It is assumed that the number of attributes extracted previously is $M$. When each decision tree is created, the initial data is at the root node, and then splits. A number $F$ of attributes is designated, and $F \leq M$. During the process of each splitting, $F$ attributes are randomly sampled from all of the $M$ attributes as a splitting attribute set. The node is split with the sampled $F$ attributes by utilizing a best method. During the splitting process, the Gini indicator is utilized as a measurement. In the process of creating a decision tree, the number $F$ remains the same.

The following is a description of the CART algorithm utilizing the Gini indicator as a measurement of splitting attribute as an example. Here, it is assumed that $F = 1$.

Firstly, the Gini indicator is defined as the following formula:

$$Gini(D) = 1 - \sum_{i=1}^{n} p_i^2$$

Where $p_i$ is the probability of a classification $C_i$ appearing in the training data set D.

For a subset $A$ of a given attribute $A_j$ ($j$ = 1, ..., $M$) extracted from the training data set $D$, if the training data set is divided into two parts $D_1$ and $D_2$, the Gini indicator for the given $D$ is as follows:

$$Gini_A(D) = \frac{|D_1|}{|D|}Gini(D_1) + \frac{|D_2|}{|D|}Gini(D_2)$$

The Gini indicator is calculated for each of the different subsets of the attribute, and the subset generating the smallest Gini indicator is selected as the splitting subset of the attribute.

For each splitting, $F$ attributes are randomly sampled from all of the $M$ attributes all over again (the number $F$ remains unchanged).

The above process is repeated until all of the nodes are leaf nodes, and the splitting stops.

At this point the single decision trees are created without trimming.

This process is done separately for all of the training data sets $D_1,D_2,...,D_l$, to obtain multiple decision trees $T_1,T_2,...,T_k$. This results in a combination $T$ formed by the multiple decision trees $T_1,T_2,...,T_k$ (also known as a random forest).

Taking data in the original training set $D$ that has not been sampled as detection input, based on the classification result $C_i$, $i$ =1, 2,...,$n$ corresponding to each group of inputted vectors, and the final classification result through the decision tree model, the classification accuracy of the entire decision tree model may also be calculated.

In the identification method for an optical fiber perimeter intrusion signal provided in the present invention, by extracting relevant features of the intrusion signals of known classifications, a training data set may be obtained to create a corresponding decision tree model. Based on the created decision tree model, a classification rule for the optical fiber perimeter intrusion signal may be determined, to identify and classify an optical fiber perimeter intrusion signal. The operation is simple, easy to implement, and has high classification capability and better classification effect.

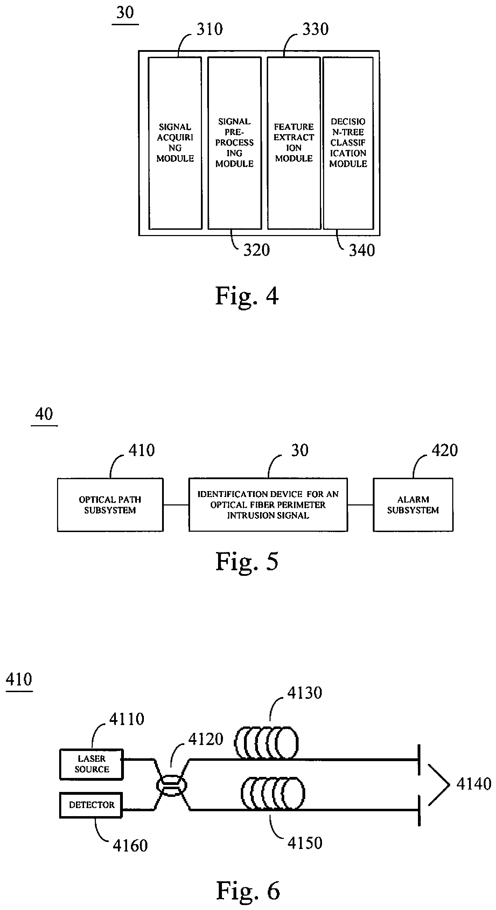

Fig. 4 is a block diagram illustrating an identification device for an optical fiber perimeter intrusion signal according to an example embodiment. As shown in Fig. 4, the device 30 includes a signal acquiring module 310, a signal pre-processing module 320, a feature extraction module 330 and a decision-tree classification module 340.

The signal acquiring module 310 is configured to acquire a real-time signal y(t) from a monitored signal of an optical fiber perimeter monitoring system.

Generally, the real-time signal *y (t)* is acquired at a sampling frequency.

The signal pre-processing module 320 is configured to preprocess the real-time signal *y(t)* to remove noise thereof, to acquire a de-noised signal *y '(t),* and determine whether the de-noised signal *y '(t)* is an intrusion signal.

For example, the real-time signal *y (t)* may be preprocessed by wavelet transform to remove noise such as background white noise.

Generally, an intrusion signal in an optical fiber perimeter system may be roughly divided into climbing, percussion and environment (such as wind, rain, snow and traffic, etc.). In some embodiments, for example, it may be determined whether it is an intrusion signal by comparing the de-noised signal y'(t) with a threshold value. When the de-noised signal *y '(t)* is higher than the threshold value, it may be determined that the de-noised signal *y' (t)* is an intrusion signal.

The feature extraction module 330 is configured to, when it is determined that the de-noised signal *y' (t)* is an intrusion signal, extract a relevant feature from the de-noised signal *y '(t).*

Firstly, the de-noised signal *y'(t)* is segmented to obtain signal segments $\{x(t_i)\}, i = 1,...,N$.

After that, a relevant feature is extracted from the discrete signal segments $\{x(t_i)\}, i = 1,...,N$. The relevant feature includes part or all of: for example, a peak mean difference (*Diff*), a variance *(D),* a skew *(Skew),* a kurtosis *(K),* a number of extreme points (*Num*), and a frequency domain feature. Among them, the peak mean difference (*Diff*), the variance (*D*), the skew *(Skew),* the kurtosis *(K)* and the number of extreme points *(Num)* belong to time domain feature. The above-mentioned features are defined and calculated as described above, which will not be repeated herein.

The decision-tree classification module 340 is configured to classify the intrusion signal according to a classification rule determined by a previously created decision tree model and the extracted relevant feature.

The above-mentioned previously created decision tree model may include either a model of a single decision tree or a model of a combination of multiple decision trees. Below classifying the intrusion signal according to a classification rule determined by a previously created decision tree model of a single decision tree and the extracted relevant feature will be discussed firstly.

After the previously created decision tree model is established, a corresponding classification rule has been established. Specifically, the classification rule is extracted from the decision tree determined by the decision tree model. Fig. 2 is a schematic diagram illustrating a single decision tree for identifying an optical fiber perimeter intrusion signal according to an example embodiment. Below, with reference to the single decision tree as shown in Fig. 2, how to determine the classification rule according to the decision tree and how to perform classification will be described.

As shown in Fig. 2, $A_1$, $A_2$ and $A_3$ represent three attributes of a decision tree, each of which is, for example, one of the above relevant features. $A_1$ corresponds to three different attribute conditions $a_{1,1}$, $a_{1,2}$ and $a_{1,3}$. $A_2$ corresponds to two different attribute conditions $a_{2,1}$ and $a_{2,2}$. $A_3$ corresponds to two different attribute conditions $a_{3,1}$ and $a_{3,2}$. $C_1$ and $C_2$ represent two classifications of intrusion signals, as described above, including, for example, climbing, striking and environment (such as wind, rain, snow and traffic, etc.) and so on. A classification rule is created for each path from the root ($A_1$ in the figure) to a leaf, expressed respectively by IF-THEN. All of the attribute conditions along the path form a combination term of the former part (i.e. the IF part) of the rule, and the leaf node containing the classification ($C_n$) forms the latter part (i.e. the THEN part) of the rule. For example, if (IF) the attribute condition of $A_1$ satisfies the condition $a_{1,2}$, the (THEN) classification is *C1*; if the attribute condition of $A_1$ satisfies the condition $a_{1,1}$ and the attribute condition of $A_2$ satisfies the condition $a_{2,2}$, the classification is $C_2$, and so on, which will not be repeated herein. It should be noted that described above is only an example as how to obtain a classification rule determined by a decision tree model, and is not intended to limit the present invention.

After the classification rule is obtained, the extracted relevant feature is applied to the classification rule to classify the intrusion signal. For example, the feature vectors $A_1$ and $A_2$ extracted from the intrusion signal respectively satisfy the attribute conditions of $a_{1,1}$ and $a_{2,1}$, the intrusion signal is classified as $C_1$.

As mentioned above, the previously created decision tree model may also be a decision tree combination model *T,* which includes multiple decision trees $T_1, T_2,...,T_k$. The following highlights how to determine the classification result based on the decision tree combination model *T*. By utilizing a simple voting method, the inputted intrusion signal is classified. For each inputted intrusion signal, each of the decision trees $T_1, T_2,...,T_k$ in the decision tree combination model *T* as a single decision tree may generate a classification result as described above. That is, each tree has a vote for one of the classifications $C_i$, i = 1,2,...,n. A number of votes for each classification $C_i$, i = 1,2,...,n is calculated, and the classification with the largest number of votes $C_j, 1 \leq j \leq n$ is finally selected as the final classification result of the intrusion signal. Alternatively, the classification results of each of the decision trees $T_1, T_2,...,T_k$ are grouped, to obtain at least one group of classification results. A number of classification results in each group is calculated. The group having the largest number of classification results is selected, and the classification in the selected group is taken as the final classification.

In addition, the device 30 for an optical fiber perimeter intrusion signal is also configured to create the above decision tree model before identifying the intrusion signal. The decision tree model includes decision tree model having a single decision tree, and a model of a combination of multiple corresponding decision trees that participate in voting.

The signal acquiring module 310 is also configured to previously acquire multiple groups of intrusion signals *Y(t)* having known classifications respectively from monitored signals of an optical fiber perimeter monitoring system.

In order to establish a decision tree model for classification of intrusion signals, multiple groups of intrusion signals *Y(t)* having known classifications and the corresponding classification results are respectively acquired from monitored signals of an optical fiber perimeter monitoring system in advance. The known classifications include, for example, the above mentioned climbing, striking and environment (such as wind, rain, snow and traffic, etc.), which is not limited thereto in the present invention.

The signal pre-processing module 320 is also configured to respectively preprocess the multiple groups of intrusion signals *Y(t)* having known classifications to remove noise thereof, to obtain multiple groups of de-noised intrusion signals *Y'(t)* respectively.

The feature extraction module 330 is also configured to respectively segment the multiple groups of de-noised intrusion signals *Y'(t)* to obtain multiple groups of discrete signal segments of intrusion signals $\{X(t_i)\}, i=1,...,N$ and respectively extract relevant features for the multiple groups of discrete signal segments of intrusion signals $\{X(t_i)\}, i=1,...,N$.

Specifically, the relevant feature includes part or all of: for example, a peak mean difference *(Diff)*, a variance *(D)*, a skew *(Skew)*, a kurtosis (K), a number of extreme points *(Num)*, and a frequency domain feature. Among them, the peak mean difference *(Diff)*, the variance (D), the skew *(Skew)*, the kurtosis *(K)* and the number of extreme points *(Num)* belong to time domain features. Hereinafter, the above-mentioned relevant feature vectors are defined and calculated as described above, which will not be repeated herein.

The decision-tree classification module 340 is also configured to establish a training data set based on the relevant features of the multiple groups of discrete signal segments of intrusion signals $\{X(t_i)\}$, $i = 1,...,N$, and a decision tree model is created.

Specifically, it is assumed that each group of signal segments of intrusion signals $\{X(t_i)\}, i=1,...,N$ has relevant features $\{A_1, A_2, ........, A_M\}$. Such a feature vector forms an inputted vector, and multiple groups of inputted vectors form a training data set *D* of a decision tree model.

Based on the entire training data set *D*, a decision tree model is created. The creation of a decision tree model having a single decision tree will be described firstly. Below a CART algorithm utilizing a Gini indicator as a measure of a splitting attribute will be illustrated as an example.

Firstly, the Gini indicator is defined by the following formula:

$$Gini(D) = 1 - \sum_{i=1}^{n} p_i^2$$

Where $p_i$ is a probability of a classification $C_i$ appearing in a training data set *D*.

For a certain attribute *A* in the training data set *D*, if the training data set *D* is divided into two parts $D_1$ and $D_2$, the given *D* may have a Gini indicator as follows:

$$Gini_A(D) = \frac{|D_1|}{|D|} Gini(D_1) + \frac{|D_2|}{|D|} Gini(D_2)$$

A Gini indicator is calculated for each of the different subsets of the attribute, and the subset having the smallest Gini indicator is selected as a splitting subset of the attribute. This process is repeated until the splitting stops. After that, the created decision tree is trimmed with the post-trimming method, to form a decision tree model with one time of training. After multiple times of training, a best decision tree model may be obtained.

The following describes the creation of a decision tree model with multiple decision trees. Still referring to Fig. 7, after determining the entire training data set *D* as described above, the training data set *D* is randomly sampled with replacement, to obtain a number *l* of training data sets $D_1, D_2,...,D_l$. Each training data set contains the same number of inputted vectors as that of the original training data set D. A corresponding decision tree model is respectively established for each of the *l* training data sets $D_1, D_2,...,D_l$. Each decision tree model may be created with the above described CART algorithm for example, and the present invention is not limited thereto.

It is assumed that the number of attributes extracted previously is *M*. A number *F* of attributes is designated, and $F \leq M$. In the process of creating a decision tree, the number F remains the same. During the process of each splitting, *F* attributes are randomly sampled from all of the *M* attributes as a splitting attribute set. The Gini indicator is utilized as a measurement, and the best splitting manner is selected, until the splitting stops.

The specific creation of a single decision tree in the model of multiple decision trees is as discussed in the method, which will not be repeated herein. After creation of each decision tree is completed, no trimming is needed.

This process is done separately for all of the training data sets $D_1, D_2, ..., D_l$, to obtain multiple decision trees $T_1, T_2, ..., T_k$. This results in a combination $T$ formed by the multiple decision trees $T_1, T_2, ..., T_k$ (also known as a random forest).

Taking data in the original training set $D$ that has not been sampled as detection input, based on the classification $C_i, i = 1, 2,...,n$ corresponding to each group of inputted vectors, and the final classification result through the decision tree model, the classification accuracy of the entire decision tree model may also be calculated.

In the identification device for an optical fiber perimeter intrusion signal provided in the present invention, by extracting relevant features of the intrusion signals of known classifications, a training data set may be obtained to create a corresponding decision tree model. Based on the created decision tree model, a classification rule for the optical fiber perimeter intrusion signal may be determined, to identify and classify an optical fiber perimeter intrusion signal. The operation method adopted by the identification device is simple, easy to implement, and has high classification capability and better classification effect.

Hereinafter an alarm system for optical fiber perimeter intrusion including the identification device for an optical fiber perimeter intrusion signal provided by the present invention will be described. Fig. 5 is a block diagram illustrating an optical fiber perimeter intrusion alarm system according to an example embodiment. As shown in Fig. 5, the optical fiber perimeter intrusion alarm system 40 includes an optical path subsystem 410, an identification device 30 for an optical fiber perimeter intrusion signal, and an alarm subsystem 420.

The optical path subsystem 410 is configured to provide a monitored signal of an optical fiber perimeter. Below the optical path subsystem 410 will be described as a Michelson interferometer for example, but the present invention is not limited herein. Fig. 6 is a schematic diagram illustrating an optical path subsystem utilizing a Michelson interferometer. As shown in Fig. 6, the optical path subsystem 410 includes a laser source 4110, a coupler 4120, a reference arm 4130, a sensitive arm 4140, a reflective end face 4150, and a detector 4160.

The laser source 4110 emits a narrow band laser. The narrow band laser is reflected on the reflective end face 4150, and interferes with light reflected by the reference arm 4130 on the detector 4160. If there is an intrusion event, a detection signal changes phase due to the modification of a disturbance signal on the sensitive arm 4140, causing change of interference fringe, and in turn, causing change in light intensity detected by the detector 4160. The detector 4160 is a photodetector, for example, and configured to convert the detected optical signal into an electrical signal for output, to provide a monitored signal of the perimeter of the optical fiber.

The identification device 30 for an optical fiber perimeter intrusion signal is configured to identify an intrusion signal and classify the intrusion signal according to the monitored signal. How the identification device 30 identifies an intrusion signal and classifies the intrusion signal has been specifically described in the above, which will not be repeated herein.

The alarm subsystem 420 is configured to issue a corresponding alarm according to the classification of the intrusion signal outputted by the identification device 30. The alarm subsystem 420 may include, for example, an alarm output control module (not shown) for outputting a control instruction to an alarm peripheral device to issue an alarm.

Example embodiments of the present invention have been particularly shown and described above. It is to be understood that the present invention is not limited to the disclosed embodiments. Rather, the present invention is intended to cover various modifications that are encompassed within the scope of the appended claims.

**Claims**

1. An identification method for an optical fiber perimeter intrusion signal, **characterized in that** the identification method comprises:

    previously acquiring (S210) multiple groups of intrusion signals having known classifications respectively from monitored signals of an optical fiber perimeter monitoring system and the corresponding classification results;
    respectively preprocessing (S220) the multiple groups of intrusion signals having known classifications to remove noise in the multiple groups of intrusion signals having known classifications;
    respectively segmenting (S230) the multiple groups of de-noised intrusion signals having known classifications, to obtain multiple groups of discrete signal segments of intrusion signals from the multiple groups of intrusion signals having known classifications, and respectively extracting relevant features for the multiple groups of discrete signal segments of intrusion signals; and
    creating a decision tree model comprising multiple decision trees according to a first training data set formed by multiple groups of relevant features for the multiple groups of discrete signal segments of intrusion signals,

wherein creating the decision tree model comprises:

randomly sampling the first training data set with replacement, to obtain multiple second training data sets, wherein each of the second training data sets has the same number of inputted vectors as number of inputted vectors contained in the first training data set; and

respectively creating multiple corresponding decision trees with a decision tree algorithm according to the multiple second training data sets;

acquiring (S110) a real-time signal from a monitored signal of an optical fiber perimeter monitoring system;

preprocessing (S120) the real-time signal to remove noise of the real-time signal;

determining (S130) whether the de-noised real-time signal is an intrusion signal;

when the de-noised real-time signal is an intrusion signal, segmenting the intrusion signal to obtain signal segments from the intrusion signal, and respectively extracting (S140) a relevant feature from the signal segments; and

classifying (S150) the intrusion signal according to a classification rule determined by the decision tree model and the extracted relevant feature of the signal segments;

wherein classifying (S150) the intrusion signal according to classification rule determined by the decision tree model and the extracted relevant feature of the signal segments, comprises:

classifying the intrusion signal successively according to a classification rule determined by each decision tree of the multiple decision trees and the extracted relevant feature of the signal segments, to obtain multiple corresponding classification results;

taking same classification results of the multiple classification results into a group, to obtain at least one group of classification results, calculating a number of the classification results in each group of classification results respectively, and taking the classification results of the group having the largest number of classification results as the final classification result of the intrusion signal;

wherein one group of relevant features form one inputted vector of the first training data set.

2. The identification method according to claim 1, wherein

the classification rule determined by each decision tree comprises: a classification rule on each path from a root of the decision tree to a leaf node of the decision tree, and

each classification rule comprises: a combination term of a former part of the classification rule formed by all of the attribute conditions along the each path, and a latter part of the classification rule formed by a leaf node on the path.

3. The identification method according to claim 1, wherein during the process of creating each decision tree, for each inputted vector of the second training data set, for each splitting, part or all of the relevant features are randomly sampled from all of the relevant features of the inputted vector once again.

4. The identification method according to claim 1, wherein creating the decision tree model comprises: creating a decision tree with a decision tree algorithm according to the first training data set, and post-trimming the decision tree to obtain the decision tree model.

5. An identification device (30) for an optical fiber perimeter intrusion signal, **characterized in that** the identification device comprises:

a signal acquiring module (310) configured to acquire a real-time signal from a monitored signal of an optical fiber perimeter monitoring system;

a signal pre-processing module (320) configured to preprocess the real-time signal to remove noise of the real-time signal and determine whether the de-noised real-time signal is an intrusion signal;

a feature extraction module (330) configured to, when the de-noised real-time signal is an intrusion signal, segment the intrusion signal to obtain signal segments from the intrusion signal, and respectively extract a relevant feature from the signal segments; and

a decision-tree classification module (340) configured to classify the intrusion signal according to a classification rule determined by a previously created decision tree model comprising multiple decision trees and the extracted relevant feature of the signal segments,

wherein classifying classify the intrusion signal according to a classification rule determined by a previously created decision tree model comprising multiple decision trees and the extracted relevant feature of the signal segments comprises: classifying the intrusion signal successively according to a classification rule determined by each decision tree of the multiple decision trees and the extracted relevant feature of the signal segments, to obtain multiple corresponding classification results; taking same classification results of the multiple classification results into a group, to obtain at least one group of classification results, calculating a number of the classification results in each group of classification results respectively, and taking the classification results of the group having the largest number of classification results as the final classification result of the intrusion signal;

wherein the acquiring module (310) is further configured to previously acquire (S210) multiple groups of intrusion signals having known classifications respectively from monitored signals of an optical fiber perimeter monitoring system and the corresponding classification results;

the signal pre-processing module (320) is further configured to respectively preprocess (S220) the multiple groups of intrusion signals having known classifications to remove noise in the multiple groups of intrusion signals having known classifications;

the feature extraction module (330) is further configured to respectively segment (S230) the multiple groups of de-noised intrusion signals having known classifications, to obtain multiple groups of discrete signal segments of intrusion signals from the multiple groups of intrusion signals having known classifications, and respectively extract relevant features for the multiple groups of discrete signal segments of intrusion signals;

the decision-tree classification module (340) is further configured to create the decision tree model comprising multiple decision trees according to a first training data set formed by multiple groups of relevant features for the multiple groups of discrete signal segments of intrusion signals,

wherein creating the decision tree model comprises:

> randomly sampling the first training data set with replacement, to obtain multiple second training data sets, each of the second training data sets has the same number of inputted vectors as number of inputted vectors contained in the first training data set; and
>
> respectively creating multiple corresponding decision trees with a decision tree algorithm according to the multiple second training data sets;
>
> wherein one group of relevant features form one inputted vector of the first training data set.

6. The identification device according to claim 5, wherein
the classification rule determined by each decision tree comprises: a classification rule on each path from a root of the decision tree to a leaf node of the decision tree, and

each classification rule comprises: a combination term of a former part of the classification rule formed by all of the attribute conditions along each path, and a latter part of the classification rule formed by a leaf node on the path.

7. The identification device according to claim 5, wherein during the process of creating each decision tree, for each inputted vector of the second training data set, for each splitting, part or all of the relevant features are randomly sampled from all of the relevant features of the inputted vector once again.

8. The identification device according to claim 5, wherein creating a decision tree model comprises: creating a decision tree with a decision tree algorithm according to the first training data set, and post-trimming the decision tree to obtain the decision tree model.

9. An optical fiber perimeter intrusion alarm system (40), **characterized in that** the optical fiber perimeter intrusion alarm system comprises:

> an optical path subsystem (410) configured to provide a monitored signal of an optical fiber perimeter;
> the identification device (30) for an optical fiber perimeter intrusion signal according to any one of claims 5-8, configured to identify an intrusion signal of the monitored signal and classify the intrusion signal of the monitored signal; and
> an alarm subsystem (420) configured to issue a corresponding alarm according to the classification of the intrusion signal outputted by the identification device.

**Patentansprüche**

1.  Identifizierungsverfahren für ein faseroptisches Umgrenzungs-Eindringsignal, **dadurch gekennzeichnet, dass** das Identifizierungsverfahren umfasst:

    vorhergehendes Erfassen (S210) mehrerer Gruppen von Eindringsignalen mit bekannten Klassifizierungen jeweils aus überwachten Signalen eines faseroptischen Umgrenzungs-Überwachungssystems und der entsprechenden Klassifizierungsergebnisse,
    jeweiliges Vorverarbeiten (S220) der mehreren Gruppen von Eindringsignalen mit bekannten Klassifizierungen, um Rauschen aus den mehreren Gruppen von Eindringsignalen mit bekannten Klassifizierungen zu entfernen,
    jeweiliges Segmentieren (S230) der mehreren Gruppen von entrauschten Eindringsignalen mit bekannten Klassifizierungen, um mehrere Gruppen von diskreten Signalsegmenten von Eindringsignalen aus den mehreren Gruppen von Eindringsignalen mit bekannten Klassifizierungen zu erhalten, und jeweiliges Extrahieren relevanter Merkmale für die mehreren Gruppen von diskreten Signalsegmenten von Eindringsignalen, und
    Erstellen eines Entscheidungsbaummodells mit mehreren Entscheidungsbäumen gemäß einem ersten Trainingsdatensatz, der aus mehreren Gruppen relevanter Merkmale für die mehreren Gruppen diskreter Signalsegmente von Eindringsignalen gebildet wird,
    wobei die Erstellung des Entscheidungsbaummodells umfasst:

    zufälliges Abtasten des ersten Trainingsdatensatzes mit Ersetzung, um mehrere zweite Trainingsdatensätze zu erhalten, wobei jeder der zweiten Trainingsdatensätze die gleiche Anzahl von eingegebenen Vektoren aufweist wie die Anzahl der eingegebenen Vektoren, die im ersten Trainingsdatensatz enthalten sind, und
    jeweiliges Erstellen mehrerer entsprechender Entscheidungsbäume mit einem Entscheidungsbaum-Algorithmus gemäß den Datensätzen der mehreren zweiten Trainingsdatensätze,

    Erfassen (S110) eines Echtzeitsignals aus einem überwachten Signal eines faseroptischen Umgrenzungs-Überwachungssystems,
    Vorverarbeiten (S120) des Echtzeitsignals, um Rauschen aus dem Echtzeitsignals zu entfernen,
    Bestimmen (S130), ob das entrauschte Echtzeitsignal ein Eindringsignal ist,
    wenn das entrauschte Echtzeitsignal ein Eindringsignal ist, Segmentieren des Eindringsignals, um Signalsegmente aus dem Eindringsignal zu erhalten, und
    jeweiliges Extrahieren (S140) eines relevanten Merkmals aus den Signalsegmenten und
    Klassifizieren (S150) des Eindringsignals gemäß einer Klassifizierungsregel, die durch das Entscheidungsbaummodell und das extrahierte relevante Merkmal der Signalsegmente bestimmt wird,
    wobei das Klassifizieren (S150) des Eindringsignals gemäß der Klassifizierungsregel, die durch das Entscheidungsbaummodell und das extrahierte relevante Merkmal der Signalsegmente bestimmt wird, umfasst:

    sukzessives Klassifizieren des Eindringsignals gemäß einer Klassifizierungsregel, die durch jeden Entscheidungsbaum der mehreren Entscheidungsbäume und das extrahierte relevante Merkmal der Signalsegmente bestimmt wird, um mehrere entsprechende Klassifizierungsergebnisse zu erhalten,
    Aufnehmen der gleichen Klassifizierungsergebnisse der mehreren Klassifizierungsergebnisse in eine Gruppe, um mindestens eine Gruppe von Klassifizierungsergebnissen zu erhalten,
    Berechnen einer Anzahl der Klassifizierungsergebnisse in jeder Gruppe von Klassifizierungsergebnissen und
    Nehmen der Klassifizierungsergebnisse der Gruppe mit der größten Anzahl von Klassifizierungsergebnissen als endgültiges Klassifizierungsergebnis des Eindringsignals,

    wobei eine Gruppe relevanter Merkmale einen eingegebenen Vektor des ersten Trainingsdatensatzes bildet.

2.  Identifikationsverfahren nach Anspruch 1, wobei
    die von jedem Entscheidungsbaum bestimmte Klassifizierungsregel umfasst: eine Klassifizierungsregel auf jedem Pfad von einer Wurzel des Entscheidungsbaums zu einem Blattknoten des Entscheidungsbaums, und
    jede Klassifizierungsregel umfasst: einen Kombinationsterm aus einem früheren Teil der Klassifizierungsregel, der durch alle Attributbedingungen entlang des jeweiligen Pfades gebildet wird, und einem späteren Teil der Klassifizierungsregel, der durch einen Blattknoten auf dem Pfad gebildet wird.

3.  Identifizierungsverfahren nach Anspruch 1, bei dem während des Prozesses des Erstellens jedes Entscheidungsbaums für jeden eingegebenen Vektor des zweiten Trainingsdatensatzes für jede Aufteilung ein Teil oder alle relevanten Merkmale nach dem Zufallsprinzip aus allen relevanten Merkmalen des eingegebenen Vektors noch einmal ausgewählt werden.

4. Identifizierungsverfahren nach Anspruch 1, wobei das Erzeugen des Entscheidungsbaummodells umfasst: Erzeugen eines Entscheidungsbaums mit einem Entscheidungsbaum-Algorithmus gemäß dem ersten Trainingsdatensatz und Nachtrimmen des Entscheidungsbaums, um das Entscheidungsbaummodell zu erhalten.

5. Identifizierungsvorrichtung (30) für ein faseroptisches Umgrenzungs-Eindringsignal, **dadurch gekennzeichnet, dass** die Identifizierungsvorrichtung umfasst:

ein Signalerfassungsmodul (310), das dazu konfiguriert ist, ein Echtzeitsignal von einem überwachten Signal eines faseroptischen Umgrenzungs-Überwachungssystems zu erfassen,
ein Signalvorverarbeitungsmodul (320), das dazu konfiguriert ist, das Echtzeitsignal vorzuverarbeiten, um Rauschen aus dem Echtzeitsignals zu entfernen und zu bestimmen, ob das entrauschte Echtzeitsignal ein Eindringsignal ist,
ein Merkmalsextraktionsmodul (330), das dazu konfiguriert ist, das Eindringsignal, wenn das entrauschte Echtzeitsignal ein Eindringsignal ist, zu segmentieren, um Signalsegmente aus dem Eindringsignal zu erhalten, und jeweils ein relevantes Merkmal aus den Signalsegmenten zu extrahieren, und
ein Entscheidungsbaum-Klassifizierungsmodul (340), das dazu konfiguriert ist, das Eindringsignal gemäß einer Klassifizierungsregel zu klassifizieren, die durch ein zuvor erstelltes Entscheidungsbaummodell bestimmt wird, das mehrere Entscheidungsbäume und das extrahierte relevante Merkmal der Signalsegmente umfasst,
wobei das Klassifizieren des Eindringsignals gemäß einer Klassifizierungsregel, die durch ein zuvor erstelltes Entscheidungsbaummodell, das mehrere Entscheidungsbäume umfasst, und das extrahierte relevante Merkmal der Signalsegmente bestimmt wird, umfasst:

sukzessives Klassifizieren des Eindringsignals gemäß einer Klassifizierungsregel, die durch jeden Entscheidungsbaum der mehreren Entscheidungsbäume und das extrahierte relevante Merkmal der Signalsegmente bestimmt wird, um mehrere entsprechende Klassifizierungsergebnisse zu erhalten,
Aufnehmen derselben Klassifizierungsergebnisse der mehreren Klassifizierungsergebnisse in eine Gruppe, um mindestens eine Gruppe von Klassifizierungsergebnissen zu erhalten,
Berechnen einer Anzahl der Klassifizierungsergebnisse in jeder Gruppe von Klassifizierungsergebnissen, und
Nehmen der Klassifizierungsergebnisse der Gruppe mit der größten Anzahl von Klassifizierungsergebnissen als das endgültige Klassifizierungsergebnis des Eindringsignals,

wobei das Erfassungsmodul (310) ferner dazu konfiguriert ist, zuvor mehrere Gruppen von Eindringsignalen mit bekannten Klassifizierungen jeweils aus überwachten Signalen eines faseroptischen Umgrenzungs-Überwachungssystems und den entsprechenden Klassifizierungsergebnissen zu erfassen (S210),
das Signalvorverarbeitungsmodul (320) ferner dazu konfiguriert ist, die mehreren Gruppen von Eindringsignalen mit bekannten Klassifizierungen entsprechend vorzuverarbeiten (S220), um Rauschen aus den mehreren Gruppen von Eindringsignalen mit bekannten Klassifizierungen zu entfernen,
das Merkmalsextraktionsmodul (330) ferner dazu konfiguriert ist, jeweils die mehreren Gruppen von entrauschten Eindringsignalen mit bekannten Klassifizierungen zu segmentieren (S230), um mehrere Gruppen von diskreten Signalsegmenten von Eindringsignalen aus den mehreren Gruppen von Eindringsignalen mit bekannten Klassifizierungen zu erhalten, und jeweils relevante Merkmale für die mehreren Gruppen von diskreten Signalsegmenten von Eindringsignalen zu extrahieren,
das Entscheidungsbaum-Klassifizierungsmodul (340) ferner dazu konfiguriert ist, das mehrere Entscheidungsbäume umfassende Entscheidungsbaummodell gemäß einem ersten Trainingsdatensatz zu erstellen, der aus mehreren Gruppen relevanter Merkmale für die mehreren Gruppen diskreter Signalsegmente von Eindringsignalen gebildet wird,
wobei das Erstellen des Entscheidungsbaummodells umfasst:

zufälliges Abtasten des ersten Trainingsdatensatzes mit Ersetzung, um mehrere zweite Trainingsdatensätze zu erhalten, wobei jeder der zweiten Trainingsdatensätze die gleiche Anzahl von eingegebenen Vektoren hat wie die Anzahl der eingegebenen Vektoren, die im ersten Trainingsdatensatz enthalten sind, und
Erstellen jeweils mehrerer entsprechender Entscheidungsbäume mit einem Entscheidungsbaum-Algorithmus gemäß den Datensätzen des mehrfachen zweiten Trainings,

wobei eine Gruppe relevanter Merkmale einen eingegebenen Vektor des ersten Trainingsdatensatzes bildet.

6. Identifizierungsgerät nach Anspruch 5, wobei
die von jedem Entscheidungsbaum bestimmte Klassifizierungsregel umfasst:
eine Klassifizierungsregel auf jedem Pfad von einer Wurzel des Entscheidungsbaums zu einem Blattknoten des Entscheidungsbaums, und
jede Klassifizierungsregel umfasst:
einen Kombinationsterm aus einem früheren Teil der Klassifizierungsregel, der durch alle Attributbedingungen entlang jedes Pfades gebildet wird, und einem späteren Teil der Klassifizierungsregel, der durch einen Blattknoten auf dem Pfad gebildet wird.

7. Identifizierungsvorrichtung nach Anspruch 5, wobei während des Prozesses des Erstellens jedes Entscheidungsbaums für jeden eingegebenen Vektor des zweiten Trainingsdatensatzes für jede Aufteilung ein Teil oder alle relevanten Merkmale nach dem Zufallsprinzip aus allen relevanten Merkmalen des eingegebenen Vektors noch einmal abgetastet werden.

8. Identifizierungsvorrichtung nach Anspruch 5, wobei das Erzeugen eines Entscheidungsbaummodells umfasst: Erzeugen eines Entscheidungsbaums mit einem Entscheidungsbaum-Algorithmus gemäß dem ersten Trainingsdatensatz und Nachtrimmen des Entscheidungsbaums, um das Entscheidungsbaummodell zu erhalten.

9. Faseroptisches Umgrenzungs-Eindringalarmsystem (40), **dadurch gekennzeichnet, dass** das faseroptische Umgrenzungs-Eindringalarmsystem umfasst:

ein Lichtweg-Subsystem (410), das dazu konfiguriert ist, ein überwachtes Signal einer faseroptischen Umgrenzung zu liefern,
die Identifizierungsvorrichtung (30) für ein faseroptisches Umgrenzungs-Eindringsignal nach einem der Ansprüche 5 bis 8, das dazu konfiguriert ist, ein Eindringsignal des überwachten Signals zu identifizieren und das Eindringsignal des überwachten Signals zu klassifizieren, und
ein Alarm-Subsystem (420), das dazu konfiguriert ist, einen entsprechenden Alarm entsprechend der Klassifizierung des von der Identifizierungsvorrichtung ausgegebenen Eindringsignals auszugeben.

## Revendications

1. Procédé d'identification destiné à in signal d'intrusion de périmètre de fibre optique, **caractérisé en ce que** le procédé d'identification comprend :

l'acquisition préalable (S210) de plusieurs groupes de signaux d'intrusion qui possèdent des classifications connues respectivement à partir de signaux surveillés d'un système de surveillance de périmètre de fibre optique et des résultats de classification correspondants ;
le prétraitement respectif (S220) des multiples groupes de signaux d'intrusion ayant des classifications connues afin de supprimer le bruit au sein des multiples groupes de signaux d'intrusion ayant des classifications connues ;
le segmentation respective (S230) des multiples groupes de signaux d'intrusion débruités ayant des classifications connues, afin d'obtenir plusieurs groupes de segments de signaux discrets des signaux d'intrusion à partir des multiples groupes de signaux d'intrusion ayant des classifications connues, et l'extraction respective de caractéristiques pertinentes pour les multiples groupes de segments de signaux discrets des signaux d'intrusion ; et
la création d'un modèle d'arbre de décision comprenant plusieurs arbres de décision selon un premier ensemble de données d'apprentissage formé par plusieurs groupes de caractéristiques pertinentes pour les multiples groupes de segments de signaux discrets des signaux d'intrusion,
dans lequel la création du modèle d'arbre de décision comprend :

l'échantillonnage aléatoire du premier ensemble de données d'apprentissage avec remplacement, afin d'obtenir plusieurs seconds ensembles de données d'apprentissage, dans lequel chacun des seconds ensembles de données d'apprentissage possède un nombre de vecteurs saisis identique au nombre de vecteurs saisis contenus dans le premier ensemble de données d'apprentissage ; et

la création respective de plusieurs arbres de décision correspondants avec un algorithme d'arbre de décision selon les multiples seconds ensembles de données d'apprentissage ;

l'acquisition (S110) d'un signal en temps réel à partir d'un signal surveillé d'un système de surveillance de périmètre de fibre optique ;

le prétraitement (S120) du signal en temps réel afin d'éliminer le bruit du signal en temps réel ;

la détermination (S130) du fait que le signal en temps réel débruité soit ou non un signal d'intrusion ;

lorsque le signal en temps réel débruité est un signal d'intrusion, la segmentation du signal d'intrusion afin d'obtenir des segments de signal à partir du signal d'intrusion, et l'extraction respective (S140) d'une caractéristique pertinente des segments de signaux ; et

la classification (S150) du signal d'intrusion selon une règle de classification déterminée par le modèle d'arbre de décision et la caractéristique pertinente extraite des segments de signaux ;

dans lequel la classification (S150) du signal d'intrusion selon la règle de classification déterminée par le modèle d'arbre de décision et la caractéristique pertinente extraite des segments de signaux comprend :

la classification du signal d'intrusion de manière successive selon une règle de classification déterminée par chaque arbre de décision des multiples arbres de décision et la caractéristique pertinente extraite des segments de signaux, afin d'obtenir plusieurs résultats de classification correspondants ;

l'intégration des résultats de classification identiques parmi les multiples résultats de classification à un groupe, afin d'obtenir au moins un groupe de résultats de classification, le calcul d'un nombre des résultats de classification dans chaque groupe de résultats de classification, respectivement, et le fait de prendre les résultats de classification du groupe ayant le plus grand nombre de résultats de classification en guise de résultat de classification final du signal d'intrusion ;

dans lequel un groupe de caractéristiques pertinentes forme un vecteur saisi du premier ensemble de données d'apprentissage.

2. Procédé d'identification selon la revendication 1, dans lequel

la règle de classification déterminée par chaque arbre de décision comprend : une règle de classification sur chaque trajet entre une racine de l'arbre de décision et un nœud de feuille de l'arbre de décision, et

chaque règle de classification comprend : un terme de combinaison d'une précédente partie de la règle de classification formée par toutes les conditions d'attributs le long de chaque trajet, et d'une dernière partie de la règle de classification formée par un nœud de feuille sur le trajet.

3. Procédé d'identification selon la revendication 1, dans lequel, pendant le processus de création de chaque arbre de décision, pour chaque vecteur saisi du second ensemble de données d'apprentissage, pour chaque division, tout ou partie des caractéristiques pertinentes sont échantillonnées de manière aléatoire à partir de l'ensemble des caractéristiques pertinentes du vecteur saisi une fois de plus.

4. Procédé d'identification selon la revendication 1, dans lequel la création du modèle d'arbre de décision comprend : la création d'un arbre de décision avec un algorithme d'arbre de décision selon le premier ensemble de données d'apprentissage, et le post-rognage de l'arbre de décision afin d'obtenir le modèle d'arbre de décision.

5. Dispositif d'identification (30) destiné à un signal d'intrusion de périmètre de fibre optique, **caractérisé en ce que** le dispositif d'identification comprend :

un module d'acquisition de signal (310) configuré pour acquérir un signal en temps réel à partir d'un signal surveillé d'un système de surveillance de périmètre de fibre optique ;

un module de prétraitement de signal (320) configuré pour prétraiter le signal en temps réel afin d'éliminer le bruit du signal en temps réel et déterminer si le signal en temps réel débruité est ou non un signal d'intrusion ;

un module d'extraction de caractéristiques (330) configuré pour, lorsque le signal en temps réel débruité est un signal d'intrusion, segmenter le signal d'intrusion afin d'obtenir des segments de signal à partie du signal d'intrusion, et pour extraire respectivement une caractéristique pertinente des segments de signal ; et

un module de classification d'arbre de décision (340) configuré pour classifier le signal d'intrusion selon une règle de classification déterminée par un modèle d'arbre de décision préalablement créé comprenant plusieurs arbres de décision et la caractéristique pertinente extraite des segments de signal,

dans lequel la classification classifie le signal d'intrusion selon une règle de classification déterminée par un modèle d'arbre de décision préalablement créé comprenant plusieurs arbres de décision, et la caractéristique pertinente extraite des segments de signal comprend : la classification du signal d'intrusion de manière successive selon une règle de classification déterminée par chaque arbre de décision des multiples arbres de décision et la caractéristique pertinente extraite des segments de signal, afin d'obtenir plusieurs résultats de classification correspondants ; l'intégration des résultats de classification identiques parmi les multiples résultats de classification à un groupe, afin d'obtenir au moins un groupe de résultats de classification, le calcul d'un nombre de résultats de classification dans chaque groupe de résultats de classification respectivement, et le fait de prendre les résultats de classification du groupe ayant le plus grand nombre de résultats de classification comme étant le résultat de classification final du signal d'intrusion ;

dans lequel le module d'acquisition (310) est en outre configuré pour acquérir au préalable (S210) plusieurs groupes de signaux d'intrusion ayant des classifications connues, respectivement, à partir des signaux surveillés d'un système de surveillance de périmètre de fibre optique et des résultats de classification correspondants ;

le module de prétraitement de signal (320) est en outre configuré pour prétraiter respectivement (S220) les multiples groupes de signaux d'intrusion ayant des classifications connues afin d'éliminer le bruit dans les multiples groupes de signaux d'intrusion ayant des classifications connues ;

le module d'extraction de caractéristique (330) est en outre configuré pour segmenter respectivement (S230) les multiples groupes de signaux d'intrusion débruités ayant des classifications connues, afin d'obtenir plusieurs groupes de segments de signaux discrets des signaux d'intrusion à partir des multiples groupes de signaux d'intrusion ayant des classifications connues, et pour extraire respectivement des caractéristiques pertinentes pour les multiples groupes de segments de signaux discrets des signaux d'intrusion ;

le module de classification d'arbre de décision (340) est en outre configuré pour créer le modèle d'arbre de décision comprenant plusieurs arbres de décision selon un premier ensemble de données d'apprentissage formé par plusieurs groupes de caractéristiques pertinentes pour les multiples groupes de segments de signaux discrets des signaux d'intrusion,

dans lequel la création du modèle d'arbre de décision comprend :

l'échantillonnage aléatoire du premier ensemble de données d'apprentissage avec remplacement, afin d'obtenir plusieurs seconds ensembles de données d'apprentissage, chacun des seconds ensembles de données d'apprentissage ayant un nombre de vecteurs saisis identique au nombre de vecteurs saisis contenus dans le premier ensemble de données d'apprentissage ; et

la création respective de plusieurs arbres de décision correspondants avec un algorithme d'arbre de décision selon les multiples seconds ensembles de données d'apprentissage ;

dans lequel un groupe de caractéristiques pertinentes forme un vecteur saisi du premier ensemble de données d'apprentissage.

6. Dispositif d'identification selon la revendication 5, dans lequel la règle de classification déterminée par chaque arbre de décision comprend : une règle de classification sur chaque trajet entre une racine de l'arbre de décision et un nœud de feuille de l'arbre de décision,

et

chaque règle de classification comprend : un terme de combinaison d'une précédente partie de la règle de classification formée par toutes les conditions d'attributs le long de chaque trajet, et d'une dernière partie de la règle de classification formée par un nœud de feuille sur le trajet.

7. Dispositif d'identification selon la revendication 5, dans lequel, pendant le processus de création de chaque arbre de décision, pour chaque vecteur saisi du second ensemble de données d'apprentissage, pour chaque division, tout ou partie des caractéristiques pertinentes sont échantillonnées de manière aléatoire à partir de l'ensemble des caractéristiques pertinentes du vecteur saisi une fois de plus.

8. Dispositif d'identification selon la revendication 5, dans lequel la création d'un modèle d'arbre de décision comprend : la création d'un arbre de décision avec un algorithme d'arbre de décision selon le premier ensemble de données d'apprentissage, et le post-rognage de l'arbre de décision afin d'obtenir le modèle d'arbre de décision.

9. Système d'alarme d'intrusion de périmètre de fibre optique (40), **caractérisé en ce que** le système d'alarme d'intrusion de périmètre de fibre optique comprend :

un sous-système de trajet optique (410) configuré pour fournir un signal surveillé d'un périmètre de fibre optique ;
le dispositif d'identification (30) destiné à un signal d'intrusion de périmètre de fibre optique selon l'une quelconque des revendications 5 à 8, configuré pour identifier un signal d'intrusion du signal surveillé et pour classifier le signal d'intrusion du signal surveillé ; et

un sous-système d'alarme (420) configuré pour délivrer une alarme correspondante selon la classification du signal d'intrusion fournie par le dispositif d'identification.

# Fig. 1

10

```
┌─────────────┐
│    START    │
└─────────────┘
       │
       ▼
┌──────────────────────────────────────────────┐    S110
│ ACQUIRE A REAL-TIME SIGNAL Y(T) FROM AN        │
│ OPTICAL FIBER PERIMETER MONITORING SIGNAL      │
└──────────────────────────────────────────────┘
       │
       ▼
┌──────────────────────────────────────────────┐    S120
│ PRE-PROCESS THE REAL-TIME SIGNAL Y(T) TO       │
│ REMOVE NOISES SO AS TO ACQUIRE A DENOISED      │
│ SIGNAL Y'(T)                                   │
└──────────────────────────────────────────────┘
       │
       ▼
┌──────────────────────────────────────────────┐    S130
│ DETERMINE WHETHER THE DE NOISED SIGNAL Y'(T)   │
│ IS AN INTRUSION SIGNAL                          │
└──────────────────────────────────────────────┘
       │
       ▼
┌──────────────────────────────────────────────┐    S140
│ IF THE DENOISED SIGNAL Y'(T) IS DETERMINED TO  │
│ BE AN INTRUSION SIGNAL, EXTRACT RELEVANT       │
│ CHARACTERISTIC VARIABLES THEREOF               │
└──────────────────────────────────────────────┘
       │
       ▼
┌──────────────────────────────────────────────┐    S150
│ CLASSIFY THE INTRUSION SIGNAL ACCORDING TO A   │
│ CLASSIFICATION RULE DETERMINED BY A PRE-       │
│ ESTABLISHED DECISION TREE MODEL AND THE        │
│ EXTRACTED RELEVANT CHARACTERISTIC VARIABLES    │
└──────────────────────────────────────────────┘
       │
       ▼
┌─────────────┐
│     END     │
└─────────────┘
```

# Fig. 2

# Fig. 3

20

```
┌─────────────┐
│    START    │
└─────────────┘
```

PREVIOUSLY ACQUIRE MULTIPLE GROUPS OF INTRUSION SIGNALS $Y(T)$ HAVING KNOWN CLASSIFICATIONS RESPECTIVELY FROM MONITORED SIGNALS OF AN OPTICAL FIBER PERIMETER MONITORING SYSTEM AND THE CORRESPONDING CLASSIFICATION RESULTS — S210

RESPECTIVELY PREPROCESS THE MULTIPLE GROUPS OF INTRUSION SIGNALS $Y(T)$ HAVING KNOWN CLASSIFICATIONS TO REMOVE NOISE, TO OBTAIN MULTIPLE GROUPS OF DE-NOISED INTRUSION SIGNALS $Y'(T)$ RESPECTIVELY — S220

RESPECTIVELY SEGMENT THE MULTIPLE GROUPS OF DE-NOISED INTRUSION SIGNALS $Y'(T)$ TO OBTAIN MULTIPLE GROUPS OF DISCRETE SIGNAL SEGMENTS OF INTRUSION SIGNALS, AND RESPECTIVELY EXTRACT RELEVANT FEATURES FOR THE MULTIPLE GROUPS OF DISCRETE SIGNAL SEGMENTS OF INTRUSION SIGNALS — S230

ESTABLISH A TRAINING DATA SET BASED ON THE RELEVANT FEATURES OF THE MULTIPLE GROUPS OF DISCRETE SIGNAL SEGMENTS OF INTRUSION SIGNALS, AND CREATE A DECISION TREE MODEL — S240

```
┌─────────────┐
│     END     │
└─────────────┘
```

<u>30</u>

310          330

| SIGNAL ACQUIRI NG MODULE | SIGNAL PRE-PROCESS ING MODULE | FEATURE EXTRACT ION MODULE | DECISIO N-TREE CLASSIF ICATION MODULE |

320          340

## Fig. 4

<u>40</u>

410                    30                    420

| OPTICAL PATH SUBSYSTEM | IDENTIFICATION DEVICE FOR AN OPTICAL FIBER PERIMETER INTRUSION SIGNAL | ALARM SUBSYSTEM |

## Fig. 5

<u>410</u>

4110          4130

LASER SOURCE     4120

DETECTOR                    4140

4160          4150

## Fig. 6

# Fig. 7

**EP 3 321 859 B1**

**REFERENCES CITED IN THE DESCRIPTION**

**Patent documents cited in the description**

- CN 104240455 A
- US 2014307956 A1